# EUROPEAN PATENT SPECIFICATION

(11) **EP 4 155 175 B1**
(45) Date of publication and mention of the grant of the patent: **24.09.2025**
(21) Application number: 22198119.4
(22) Date of filing: 27.09.2022
(51) Int. Cl.: B62J 7/04, B62J 7/08

(54) **REMOVABLE LUGGAGE CARRIER SPRING FLAP AND LUGGAGE CARRIER ARRANGEMENT WITH SUCH REMOVABLE LUGGAGE CARRIER SPRING FLAP**
ABNEHMBARE GEPÄCKTRÄGERFEDERKLAPPE UND GEPÄCKTRÄGERANORDNUNG MIT EINER SOLCHEN ABNEHMBAREN GEPÄCKTRÄGERFEDERKLAPPE
VOLET DE RESSORT DE PORTE-BAGAGES AMOVIBLE ET AGENCEMENT DE PORTE-BAGAGES AVEC UN TEL VOLET DE RESSORT DE PORTE-BAGAGES AMOVIBLE

(30) Priority: 28.09.2021 DE 202021105225 U
(43) Date of publication of application: 29.03.2023
(73) Proprietor: ZEG Zweirad-Einkaufs-Genossenschaft eG, 50739 Köln (DE)
(72) Inventor: Gehring, Hendrik, 41429 Bergisch Gladbach (DE)
(74) Representative: Patentanwälte Buschhoff Hennicke Althaus

(56) References cited:
- EP-A1- 3 241 727
- AT-B- 185 689
- CN-Y- 2 803 876
- DE-C- 932 771
- GB-A- 609 458
- US-A- 5 634 578

## Description

The invention relates to a removable luggage carrier spring flap for a luggage carrier of land vehicles, in particular bicycles, electric bicycles, motorcycles and other single-track vehicles, having longitudinal members and transverse members, with a clamping bracket having two legs connected to each other and with a tension spring detachably arranged near rear ends of the legs, which spring has a central tensioning bracket and two spring coils arranged laterally of the tensioning bracket, which coils respectively have an outer retaining hook for interacting with respectively one of the legs of the clamping bracket, and with a locking arrangement for detachably fastening the spring flap together with the tension spring to the luggage carrier. The invention also relates to a luggage carrier arrangement of land vehicles, with a luggage carrier having longitudinal members and transverse members, with a luggage carrier spring flap that that can be removably fastened to the luggage carrier rack, which flap has a clamping bracket with two legs connected to each other, and a tension spring detachably arranged near rear ends of the legs, which spring has a central tensioning bracket and two spring coils arranged laterally of the tensioning bracket, the coils respectively having an outer retaining hook for interacting with respectively one of the legs of the clamping bracket, and with a locking arrangement for detachably fastening the spring flap together with the tension spring to the luggage carrier.

Bicycles, mopeds, electric bicycles, and sometimes motorcycles and other single-track vehicles have luggage carriers for transporting articles on the luggage carrier. More recently, the trend has been to optionally mount an adapter plate on the luggage carrier in order to fasten correspondingly adapted bags etc. to the adapter plate, which in turn is fastened to the luggage carrier in a suitable manner. In order to nevertheless offer the user of the vehicle high flexibility, removable luggage carrier spring flaps are available which can be detachably fastened directly to the luggage carrier or the luggage carrier rack forming it, or which can be fastened to corresponding adapter plates.

One system available on the market uses detachable luggage carrier spring flaps that use half-rings as locking elements, which can be connected to form a closed clamping ring that firmly clamps the longitudinal members of the luggage carrier between themselves in order to correspondingly lock the spring flap to the longitudinal members in a force-locking or friction-locking manner. The position of the spring flap can be varied within limits, as it is only necessary to ensure that the central tensioning bracket of the tension spring is positioned in such a manner that it engages under a crossbar or a transverse member of the luggage carrier. Another system available on the market uses half-shell-shaped jaw openings that are clamped against the longitudinal members from above and are pressed against the top of the longitudinal members due to the clamping tension applied via the tensioning bracket. An additional securing screw is provided for this system to avoid unintentional release of the luggage carrier spring flap.

CN 2 803 876 Y **discloses the preamble of claim 1 and shows another detachable spring flap for bicycle luggage carriers having mounting holes on the inner sides, facing each other, of the longitudinal members.** CN 2 803 876 Y **discloses different ways to fix the spring flap within these holes. Each of the embodiments uses at least a supplemental spring and Sleeve or pin combination assigned to at least one of the ends of a hollow fixing rod such that for mounting the flap, the said sleeve or pin is moved against the force of the additional spring arranged inside the rod or inside the sleeve. After installation, tooling is needed for dismounting the flap.**

Starting from this state of the art, the invention is based on the object of creating a removable luggage carrier spring flap that can be assembled and disassembled as easily as possible and at the same time enables secure fixing and locking to the luggage carrier without the need for elaborate pre-fittings on the luggage carrier or its longitudinal and transverse members.

This object is solved with the invention according to claim 1. Advantageous embodiments for a spring flap, as well as a luggage carrier arrangement using such spring flap, are disclosed in claims 2 to 14.

To solve this object, the invention suggests for the luggage carrier spring flap that the locking arrangement has, with respect to the clamping bracket, separate locking elements that can be locked by pushing the legs and spring coils together during the assembly process of the luggage carrier spring flap on locking receptacles on the longitudinal members of the luggage carrier or can be detached by pushing them together during the disassembly process from the luggage carrier. For the assembly and disassembly, the flexibility and restoring force of the material and the shape of the clamping bracket are thus used on the one hand, but not alone, but together with the restoring force of the material and the shape of the tension spring, and there in particular the tensioning bracket of the tension spring. Compared with any known solutions, this provides a surprisingly simple way of locking the detachable luggage carrier spring flap to the luggage carrier, which is easy to assemble and at the same time significantly safer.

The locking arrangement has at least one securing element that can be positioned between the spring coils and, in the assembled state, prevents or restricts that the legs of the clamping bracket are pushed together. Thus, any operating error or malfunction can be prevented by a relatively simple securing element. If the security element is provided with a lock or the like at the same time, the luggage carrier spring flaps can even be designed to be theft-proof. As a protection against theft, it can also be sufficient to design the security element in such a manner that it can only be disassembled with (special) tools, for example. The assembly and disassembly of the spring flap and its locking elements, on the other hand, is otherwise possible without tools, unless anti-theft protection is deliberately provided by means of special tools.

The locking arrangement can further preferably have a transverse bar and two separate locking elements, wherein the transverse bar has a thickness that is smaller than the inner diameter of the spring coils, and wherein, in the assembled state, the locking elements are connected to each other in a distance-variable manner via the transverse bar engaging through the coils. The provision of a transverse bar that can be completely disassembled together with the locking elements, improves the stability of the spring flap and at the same time makes it possible that no restrictions exist with regard to the fastening of other accessories when the spring flap is disassembled.

According to the particularly preferred design, each of the two locking elements has a locking pin, an abutment collar and a sleeve section or a pin section, wherein the sleeve section or the pin section has a thickness that is smaller than the inner diameter of the spring coils, and in the assembled state respectively dips at least partially into an inner space delimited by the spring coils, and wherein the abutment collar in the assembled state preferably abuts the respective outer surfaces of the spring coils eyelets at the ends of the legs of the clamping bracket. For a corresponding locking arrangement, corresponding locking holes are then to be provided on the facing inner sides of the longitudinal members, opposite one another, as the only precaution. The length of the locking pin determines the extent by which the legs must be pushed together with the spring coils in order to assemble or disassemble the spring flap.

In an alternative design, each of the two locking elements could have a half-shell-shaped locking jaw, an abutment collar and a sleeve section or a pin section, wherein the sleeve section or the pin section has a thickness that is smaller than the inner diameter of the spring coils, and in the assembled state respectively dips at least partially into an inner space delimited by the spring coils, wherein the abutment collar in the assembled state abuts respective outer end surfaces of the spring coils or eyelets ends of the legs of the clamping bracket, and wherein the opening mouths of the locking jaws face outward or away from each other in the assembled state. According to one embodiment variant, the abutment collar could hereby respectively be formed on the back of a locking jaw or be formed by means of the back of a locking jaw, thus be an integral component of the locking jaw.

In both variants, it is particularly advantageous if the transverse bar dips into sleeve openings on the sleeve sections with its bar ends in the assembled state, or if the transverse bar is tubular and receives the pin sections of the locking elements with its tubular inner space. This improves the bending stiffness of the locking arrangement and insofar also the mounting of the tension spring and the clamping bracket on the luggage carrier.

In a luggage carrier arrangement for land vehicles, the above object is solved in particular in that the longitudinal members are provided with locking receptacles for locking elements of the luggage carrier spring flap, wherein the locking elements can be locked on the locking receptacles by pushing the legs and the spring coils together during the assembly process of the luggage carrier spring flap or can be detached from the luggage carrier during the disassembly process by pushing them together.

Preferably, the luggage carrier spring flap can then be formed for different design variants as already described above.

Depending on the design of the spring flap, in one embodiment variant of a luggage carrier arrangement, the longitudinal members can respectively be provided, at least on their inner sides facing one another, with at least one locking hole for the form-fitting reception of a locking pin on a locking element interacting with the longitudinal member. The only pre-fitting on the luggage carrier thus consists of locking holes, which are mounted to a suitable, systemic predetermined position on the longitudinal beams of the luggage carrier or of the luggage carrier rack. This can also be carried out later by any bicycle repair shop. On the luggage carrier itself, there is only a barely visible locking hole on each of the longitudinal members if the spring flaps are not mounted. And even with the spring flap installed, it is not possible to see that the spring flap is disassembled as the locking means do not allow this to be seen. The solution according to the invention is therefore also visually extremely attractive and thereby advantageous.

In another embodiment variant, the longitudinal members are preferably provided on their inner sides facing each other and/or on the upper and/or bottom sides with a receiving recess for the form-fitting engagement of a half-shell-shaped locking jaw, wherein the locking jaw is respectively formed on a locking element interacting with the longitudinal member. In this embodiment variant, the longitudinal members must be pre-fitted with recesses at a suitable position. As these have only minimal longitudinal expansions in the direction of travel, they do not restrict the fastening of accessories and the flat placement of bags, etc. in any way. The depth of the recesses is preferably adapted to the wall thickness of the jaw, so that, in the assembled state, the longitudinal members again essentially have a flat upper side that is partially closed again by the jaw.

According to one design, the longitudinal members and transverse members, together with carrying and holding rods, can form a luggage carrier rack which can be mounted on a bicycle frame or the like. However, the spring flap can also be retrofitted for an adapter plate or assembly plate, which in turn is fixed to a luggage carrier rack in any manner. Correspondingly, the longitudinal members and transverse members can also form an assembly plate that can be detachably fastened to a luggage carrier rack that can be mounted on a bicycle frame or the like.

Further advantages and designs of a luggage carrier spring flap according to the invention result from the following description of an exemplary embodiment depicted in the drawing in a highly simplified manner. In the drawing are shown:
- **FIG 1**: in a perspective view, a schematically highly simplified and only partially depicted luggage carrier with an assembled, detachable luggage carrier spring flap;
- **FIG 2**: the luggage carrier in the depiction of figure 1 with the luggage carrier spring flap disassembled;
- **FIG 3**: in a perspective view, a detachable luggage carrier spring flap as a unit; and
- **FIG 4**: in a perspective view, the detachable luggage carrier spring flap in an exploded view.

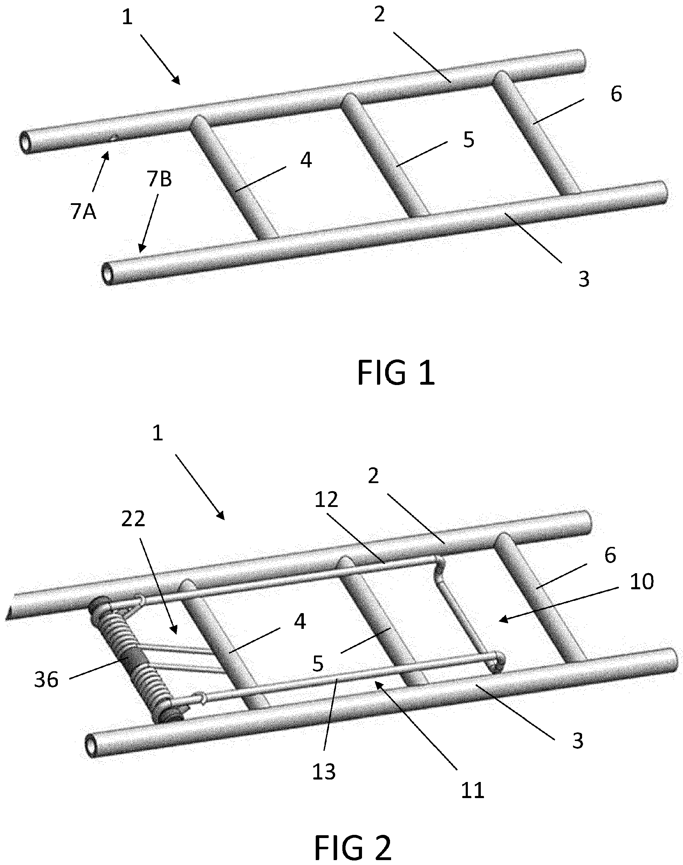

In **FIG.** 1, a luggage carrier is altogether designated with reference numeral 1, to which a luggage carrier spring flap, altogether designated with reference numeral 10, is detachably fastened. The luggage carrier 1 is depicted only partially, namely with the section of its luggage carrier rack to which a basket or a bag can be fastened by means of the luggage carrier spring flap 10 if this is mounted on the luggage carrier 1. Whereas, when the luggage carrier spring flap 10 is disassembled, a bag can also be fastened to the corresponding surface of the luggage carrier rack by means of tension belts (not depicted) or an adapter plate (not depicted) or the like.

As basic elements, which are also necessary for the interaction with the luggage carrier spring clamp 10 according to the invention, the luggage carrier 10 has two longitudinal members 2, 3 spaced apart from one another and several transverse members 4, 5, 6, here three, connecting these longitudinal members to one another. It goes without saying that the transverse members can also consist of cross bars of any cross-section, and that the number of transverse members can vary. At least two transverse members or cross bars should be present so that the luggage carrier spring flap 10 has an abutment for the tension spring 20, and so that the U-shaped clamping bracket of the spring flap 10, altogether designated with reference numeral 11, has a stop at the height of the tops of the longitudinal members 2.3. In the exemplary embodiment shown, the rear left transverse member 4 in figure 1 serves as an abutment for a clamping bracket 22, which is U-shaped here, with its underside, and the middle transverse member 5 serves as a limit stop for the clamping bracket 11.

From **FIG. 1****,** **FIG. 3** and **FIG. 4****,** it is readily apparent that the clamping bracket 11 itself, which is preferably manufactured as a bent part from a piece of metal wire, has, due to its U-shape, two legs 12, 13 which run parallel to one another and at a slightly smaller distance than the two longitudinal members 2, 3, wherein the two legs 12, 13 of the clamping bracket 11 are connected via an intermediate piece 14 which at the same time forms the main clamping surface of the clamping bracket 11 on the end face. The rear, free end of each leg 12,13 is respectively bent over to form an eyelet 15,16, which is dimensioned sufficiently so that each eyelet 15,16 can be partially gripped by sections of respectively a locking element 31A, 31B of a locking arrangement designated altogether with reference numeral 30, wherein the locking arrangement consists of several individual elements including the two locking elements 31A, 31B. Both locking elements 31A, 31B, which preferably consist of plastic, are constructed identically to each other and respectively have an annular or disc-shaped abutment collar 32 here, on one side of which a comparatively short, preferably about 3-8 mm long locking pin 33 protrudes, and on the other side of which is formed an internally hollow sleeve section 34 of several cm in length. The locking pin 33 serves as a form-fitting locking means in order to detachably fasten the spring flap 10 to the longitudinal members 2,3 of the luggage carrier 1.

For better understanding, brief reference is made to **FIG. 1****,** as can be seen exclusively in this figure that the two longitudinal members 2,3 are respectively formed with a small locking hole 7A, 7B on their inner sides facing each other, which is formed here as a blind hole, but can also be installed as a through hole. The inner diameter of the locking hole 7A, 7B is adapted to respectively accommodate the locking pin 33 of a locking element 31A, 31B in a form-fitting manner with as little movement play as possible.

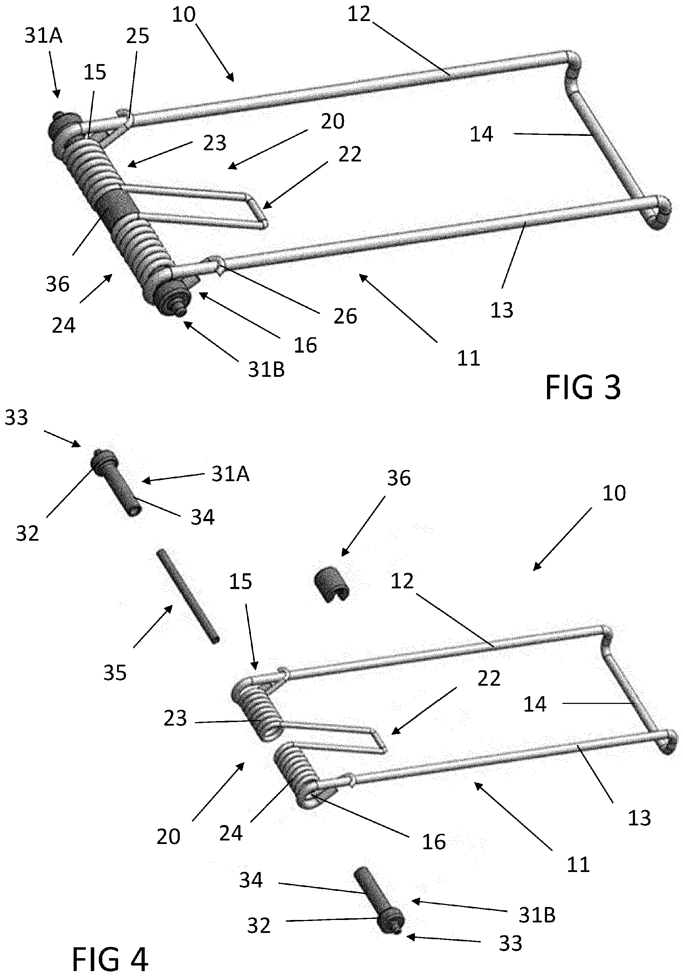

Before the assembly of the luggage carrier spring flap 11 according to the invention by means of the locking arrangement 30 is explained, the further elements of the locking arrangement and the of spring flap 11 are first introduced with reference in particular to **FIG. 3** and **FIG. 4****.** The tension spring 20 has not only the centrally arranged tensioning bracket 22 but also a spring coil 23, 24 on both sides of the tensioning bracket 22, wherein each spring coil 23, 24 ends in a hook section 25, 26 which is formed to, in the assembled state, in which the spring coils 23,24 are aligned with the eyelets 15,16 at the ends of the legs 12,13 of the clamping bracket 11, partially enclose these legs 12 or 13 in order to form a second abutment for the tension spring 20 to generate a tensioning force when pivoting the clamping bracket 11. The spring coils 23,24 enclose a cavity inside, the clear width of which is in any case so large that the sleeve sections 34 on the locking elements 31A, 31B can dip through the eyelets 15,16 into the respective cavity within the spring coil 23,24. A transverse bar 35, preferably also made of plastic, serves here to connect the two locking elements 31A, 31B to each other to form a pivot axis for the tension spring 20 and the clamping bracket 11. The thickness of the transverse bar 35 is selected to be smaller than the clear width of the cavities of the sleeve sections 34, and the length is selected so that the two sleeve sections 34 can be moved toward each other on the transverse bar 35 while changing their distance. Furthermore, as the only additional element provided in the depicted luggage carrier spring flap 10 according to the invention is a securing element 36, which, as can be seen clearly in **FIG. 2** and **FIG. 3****,** is inserted into the intermediate space between the two spring coils 23, 24 in the assembled state of the luggage carrier spring flap 10 on a luggage carrier and completely fills this space, whereby a reduction of the distance between the spring coils 23, 24 and insofar also between the legs 12, 13 of the clamping bracket 11 can be prevented.

The assembly of the luggage carrier spring flap 10 according to the invention is amazingly simple. The almost fully assembled unit consisting of the spring flap 11, tension spring 20 and locking arrangement 30 is positioned, without the securing element 36, between the two longitudinal members 2, 3 of the luggage carrier 1, in such a manner that, on the one hand, the tensioning bracket 22 engages under the rear transverse member 4, wherein, at the same time, due to the securing element 36 not present at this time, the two legs 12, 13 of the clamping bracket 11 can be pressed together at their free ends having the eyelets 15,16. Due to the U-shape of also the tensioning bracket 22, the coils 23, 24 are also brought closer together, and namely to such an extent that the locking pins 33 of the two locking elements 31A, 31B lie between the inner sides of the longitudinal members 2, 3 directly in front of the locking holes 7A, 7B. The necessary degree of bending of the two legs 12,13 to each other is only a few millimetres, preferably about 8-20 mm, so that the deformation capacity is completely reversible due to the material properties of the clamping bracket 11 and the tension spring 20 and requires only little effort. As soon as this position has been reached, the two legs 12, 13 are loosened and, due to the restoring force, the locking pins 33 slide into the associated locking holes 7A, 7B. Even without the securing element 36, the inherent rigidity of the clamping bracket 11 and of the tension spring 20 would be sufficient for the locking pins 33 not to come loose from the associated locking holes, as, the normal case, no forces act transversely to the clamping bracket, thus in the axial direction of the pivot axis of the clamping bracket 11. With an additional securing element 36, which can consist of a half-shell made of plastic with a suitable width, any movement of the spring coils 23, 24 towards one another can also be prevented by form fit or in any case restricted to such an extent that both locking pins inevitably remain in the locking holes.

From the above description, numerous deviations result for the person skilled in the art, which shall fall within the scope of protection of the appended claims. The design with a U-shaped clamping bracket and U-shaped tensioning bracket forms a preferred design. The clamping bracket and/or the tensioning bracket could also have a V-shape, or a suitable hybrid shape. Instead of locking holes and locking pins interacting with these, recesses could also be present on the longitudinal members, into which half-shell-shaped locking jaws engage from the inner side of the longitudinal members. The form fit between the locking jaws and the recesses then also secures the position of the luggage carrier spring flap in or against the direction of travel. The transverse bar could also consist of a hollow bar which slidably receives pin sections on the locking elements. The materials, thicknesses, distances and number of spring coils, etc. can also vary, depending on the forces to be absorbed and the area of application of the spring flap. The spring flap also does not have to be fastened directly to a luggage carrier, but could only be indirectly fastened to a luggage carrier via an adapter plate and itself be detachably fastened to the adapter plate.

## Claims

1. A removable luggage carrier spring flap for a luggage carrier of land vehicles, in particular bicycles, electric bicycles, motorcycles and other single-track vehicles, with a clamping bracket (11) having two legs (12, 13) connected to each other, and a tension spring (20) detachably arranged near rear ends of the legs (12, 13), which spring has a central tensioning bracket (22) and two spring coils (23, 24) arranged laterally of the tensioning bracket (22), the coils respectively having an outer retaining hook for interacting with respectively one of the legs of the clamping bracket (11), and with a locking arrangement (30) for detachably fastening the spring flap together with the tension spring to the luggage carrier having longitudinal members and transverse members, **wherein** the locking arrangement (30) has locking elements (31A, 31B) that are lockable on locking receptacles on the longitudinal members of the luggage carrier, wherein the locking elements (31A, 31B) are lockable on the locking receptacles by pushing the legs (12, 13) and the spring coils (23, 24) together during the assembly process and are detachable from the luggage carrier by pushing the legs (12, 13) and the spring coils (23, 24) together during the disassembly process, respectively, and **characterized in that** the locking arrangement (30) has at least one securing element (36) that is positionable between the spring coils (23, 24) and, in the assembled state, prevents or restricts that the legs (12, 13) of the clamping bracket (11) are pushed together.

2. The luggage carrier spring flap according to claim 1, **characterized in that** the locking arrangement (30) has a transverse bar (35) and two separate locking elements (31A, 31B), wherein the transverse bar has a thickness that is smaller than the inner diameter of the spring coils, and wherein, in the assembled state, the locking elements are connected to each other in a distance-variable manner via the transverse bar engaging through the coils.

3. The luggage carrier spring flap according to claim 2, **characterized in that** each locking element (31A, 31B) has a locking pin (33), an abutment collar (32) and a sleeve section (34) or a pin section, wherein the sleeve section (34) or the pin section has a thickness that is smaller than the inner diameter of the spring coils, and in the assembled state respectively dips at least partially into an inner space delimited by the spring coils, and wherein the abutment collar in the assembled state preferably abuts the respective outer surfaces of the spring coils or abuts eyelets at the ends of the legs of the clamping bracket.

4. The luggage carrier spring flap according to claim 2, **characterized in that** each locking element has a half-shell-shaped locking jaw, an abutment collar and a sleeve section or a pin section, wherein the sleeve section or the pin section has a thickness that is smaller than the inner diameter of the spring coils, and in the assembled state respectively dips at least partially into an inner space delimited by the spring coils.

5. The luggage carrier spring flap according to claim 4, **characterized in that** the abutment collar in the assembled state abuts the respective outer end surfaces of the spring coils or abuts eyelets at the ends of the legs of the clamping bracket, and wherein the opening mouths of the locking jaws face outward or away, respectively from each other in the assembled state.

6. The luggage carrier spring flap according to claim 4 or 5, **characterized in that** the abutment collar is respectively formed on the back of a locking jaw or is formed by means of the back of a locking jaw.

7. The luggage carrier spring flap according to any of claims 3 to 6, **characterized in that** the transverse bar (35) dips into sleeve openings on the sleeve sections (34) with its bar ends in the assembled state, or that the transverse bar is tubular and receives the pin sections of the locking elements with its tubular inner space.

8. A luggage carrier arrangement for land vehicles, with a luggage carrier having longitudinal members and transverse members, and with a luggage carrier spring flap that is removably fastened to the luggage carrier rack, wherein the longitudinal members (2, 3) are provided with locking receptacles for locking elements of the luggage carrier spring flap, **characterized in that** the luggage carrier spring flap is formed according to one of claims 1 to 7.

9. A luggage carrier arrangement for land vehicles, with a luggage carrier having longitudinal members and transverse members, and with a luggage carrier spring flap that is removably fastened to the luggage carrier rack, wherein the longitudinal members (2, 3) are respectively provided with a locking hole (7A, 7B) at least on their inner sides facing one another, **characterized in that** the luggage carrier spring flap is formed according to claim 3, and the locking pin (33 protruding on the locking element (31A, 31B) interacting with the longitudinal member is received in a form-fitting manner in the corresponding locking hole (7A, 7B).

10. The luggage carrier arrangement according to claim 9, **characterized in that** the transverse bar (35) dips into sleeve openings on the sleeve sections (34) with its bar ends in the assembled state, or that the transverse bar is tubular and receives the pin sections of the locking elements with its tubular inner space.

11. A luggage carrier arrangement for land vehicles, with a luggage carrier having longitudinal members and transverse members, and with a luggage carrier spring flap that is removably fastened to the luggage carrier rack, **characterized in that** the luggage carrier spring flap is formed according to any of claims 4 to 6, and the longitudinal members are provided, on their inner sides facing one another and/or on the upper and/or bottom sides, with a receiving recess for the form-fitting engagement of the half-shell-shaped locking jaw, which is respectively formed on the locking element interacting with the longitudinal member.

12. The luggage carrier arrangement according to claim 11, **characterized in that** the transverse bar (35) dips into sleeve openings on the sleeve sections (34) with its bar ends in the assembled state, or that the transverse bar is tubular and receives the pin sections of the locking elements with its tubular inner space.

13. The luggage carrier arrangement according to one of claims 9 to 12, **characterized in that** the longitudinal members and the transverse members form a luggage carrier rack together with carrier and holding rods, which rack is mountable on a bicycle frame or the like.

14. The luggage carrier arrangement according to one of claims 9 to 12, **characterized in that** the longitudinal members and transverse members form an assembly plate that is detachably fastened to a luggage carrier rack which is mountable on a bicycle frame or the like.

## Patentansprüche

1. Abnehmbare Gepäckträger-Federklappe für Gepäckträger von Landfahrzeugen, insbesondere Fahrrädern, Elektrofahrrädern, Motorrädern und anderen einspurigen Fahrzeugen, mit einem zwei miteinander verbundene Schenkel (12, 13) aufweisenden Klemmbügel (11) und einer lösbar nahe von hinteren Enden der Schenkel (12, 13) angeordneten Spannfeder (20), die einen mittigen Spannbügel (22) und zwei seitlich des Spannbügels (22) angeordnete Federwicklungen (23, 24) aufweist, die jeweils einen äußeren Haltehaken zum Zusammenwirken mit jeweils einem der Schenkel des Klemmbügels (11) aufweisen, und mit einer Arretieranordnung (30) zum lösbaren Befestigen der Federklappe zusammen mit der Spannfeder an dem Längsholme und Querholme aufweisenden Gepäckträger, **wobei** die Arretieranordnung (30) Arretierelemente (31A, 31B) aufweist, die an Arretieraufnahmen an den Längsholmen des Gepäckträgers arretierbar sind, wobei die Arretierelemente (31A, 31B) durch Zusammenschieben der Schenkel (12, 13) und der Federwicklungen (23, 24) beim Montagevorgang an den Arretieraufnahmen an den Längsholmen des Gepäckträgers arretierbar sind und beim Demontagevorgang durch Zusammenschieben der Schenkel (12, 13) und der Federwicklungen (23, 24) vom Gepäckträger jeweils lösbar sind, **dadurch gekennzeichnet, dass** die Arretieranordnung (30) mindestens ein Sicherungselement (36) aufweist, welches zwischen den Federwicklungen (23, 24) positionierbar ist und im Montagezustand ein Zusammenschieben der Schenkel (12, 13) des Klemmbügels (11) verhindert oder einschränkt.

2. Gepäckträger-Federklappe nach Anspruch 1, **dadurch gekennzeichnet, dass** die Arretieranordnung (30) einen Querstab (35) und zwei separate Arretierelemente (31A, 31B) aufweist, wobei der Querstab eine Dicke aufweist, die geringer ist als der Innendurchmesser der Federwicklungen, und wobei im Montagezustand die Arretierelemente über den die Wicklungen durchgreifenden Querstab abstandsveränderbar miteinander verbunden sind.

3. Gepäckträger-Federklappe nach Anspruch 2, **dadurch gekennzeichnet, dass** jedes der beiden Arretierelemente (31A, 31B) einen Arretierzapfen (33), einen Anlagekragen (32) und einen Hülsenabschnitt (34) oder Stiftabschnitt aufweist, wobei der Hülsenabschnitt (34) oder Stiftabschnitt eine Dicke aufweist, die geringer ist als der Innendurchmesser der Federwicklungen, und im Montagezustand jeweils zumindest partiell in einen von den Federwicklungen begrenzten Innenraum eintaucht, und wobei vorzugsweise der Anlagekragen im Montagezustand an den jeweils äußeren Flächen der Federwicklungen anliegt oder an Ösen an den Enden der Schenkel des Klemmbügels anliegt.

4. Gepäckträger-Federklappe nach Anspruch 2, **dadurch gekennzeichnet, dass** jedes der beiden Arretierelemente ein halbschalenförmiges Arretiermaul, einen Anlagekragen und einen Hülsenabschnitt oder Stiftabschnitt aufweist, wobei der Hülsenabschnitt oder Stiftabschnitt eine Dicke aufweist, die geringer ist als der Innendurchmesser der Federwicklungen, und im Montagezustand jeweils zumindest partiell in einen von den Federwicklungen begrenzten Innenraum eintaucht

5. Gepäckträger-Federklappe nach Anspruch 4, **dadurch gekennzeichnet, dass** der Anlagekragen im Montagezustand an jeweils äußeren Endflächen der Federwicklungen anliegt oder an Ösen an den Enden der Schenkel des Klemmbügels anliegt, und wobei die Öffnungsmündungen der Arretiermäuler im Montagezustand nach außen bzw. voneinander weg weisen.

6. Gepäckträger-Federklappe nach Anspruch 4 oder 5, **dadurch gekennzeichnet, dass** der Anlagekragen jeweils an der Rückseite eines Arretiermauls ausgebildet ist oder mittels der Rückseite eines Arretiermauls gebildet ist.

7. Gepäckträger-Federklappe nach einem der Ansprüche 3 bis 6, **dadurch gekennzeichnet, dass** der Querstab (35) im Montagezustand mit seinen Stabenden in Hülsenöffnungen an den Hülsenabschnitten (34) eintaucht, oder dass der Querstab rohrförmig ist und mit seinem Rohrinnenraum die Stiftabschnitte der Arretierelemente aufnimmt.

8. Gepäckträgeranordnung für Landfahrzeuge, mit einem Längsholme und Querholme aufweisenden Gepäckträger, und mit einer abnehmbar an dem Gepäckträgergestell befestigbaren Gepäckträger-Federklappe, wobei die Längsholme (2, 3) mit Arretieraufnahmen für Arretierelemente der Gepäckträger-Federklappe versehen sind, **dadurch gekennzeichnet, dass** die Gepäckträger-Federklappe gemäß einem der Ansprüche 1 bis 7 ausgebildet ist.

9. Gepäckträgeranordnung für Landfahrzeuge, mit einem Längsholme und Querholme aufweisenden Gepäckträger, und mit einer abnehmbar an dem Gepäckträgergestell befestigbaren Gepäckträger-Federklappe, wobei die Längsholme (2, 3) jeweils mit einem Arretierloch (7A, 7B) zumindest an ihren einander zugewandt liegenden Innenseiten, **dadurch gekennzeichnet, dass** die die Gepäckträger-Federklappe gemäß Anspruch 3 ausgebildet ist, und der an dem Arretierelement (31A, 31B)vorspringende und mit dem Längsholm zusammenwirkende Arretierzapfen (33) formschlüssig in dem jeweiligen Arretieren Loch (7A, 7B) aufgenommen ist.

10. Gepäckträgeranordnung nach Anspruch 9, **dadurch gekennzeichnet, dass** der Querstab (35) im Montagezustand mit seinen Stabenden in Hülsenöffnungen an den Hülsenabschnitten (34) eintaucht, oder dass der Querstab rohrförmig ist und mit seinem Rohrinnenraum die Stiftabschnitte der Arretierelemente aufnimmt.

11. Gepäckträgeranordnung für Landfahrzeuge, mit einem Längsholme und Querholme aufweisenden Gepäckträger, und mit einer abnehmbar an dem Gepäckträgergestell befestigbaren Gepäckträger-Federklappe, **dadurch gekennzeichnet, dass** die Gepäckträger-Federklappe gemäß einem der Ansprüche 4 bis 6 ausgebildet ist, und die Längsholme an ihren einander zugewandt liegenden Innenseiten und/oder an den Ober- und/oder Unterseiten mit einer Aufnahmeeinziehung für den formschlüssigen Eingriff des halbschalenförmigen Arretiermauls versehen ist, das jeweils an einem mit dem Längsholm zusammenwirkenden Arretierelement ausgebildet ist.

12. Gepäckträgeranordnung nach Anspruch 11, **dadurch gekennzeichnet, dass** der Querstab (35) im Montagezustand mit seinen Stabenden in Hülsenöffnungen an den Hülsenabschnitten (34) eintaucht, oder dass der Querstab rohrförmig ist und mit seinem Rohrinnenraum die Stiftabschnitte der Arretierelemente aufnimmt.

13. Gepäckträger nach einem der Ansprüche 9 bis 12, **dadurch gekennzeichnet, dass** die Längsholme und Querholme zusammen mit Trag- und Haltestangen ein Gepäckträgergestell bilden, welches an einem Fahrradrahmen od. dgl. montierbar ist.

14. Gepäckträger nach einem der Ansprüche 9 bis 12, **dadurch gekennzeichnet, dass,** die Längsholme und Querholme eine Montageplatte bilden, die lösbar an einem Gepäckträgerstell befestigbar ist, welches an einem Fahrradrahmen od. dgl. montierbar ist.

## Revendications

1. Volet de ressort de porte-bagages amovible pour porte-bagages de véhicules terrestres, en particulier de bicyclettes, de bicyclettes électriques, de motocyclettes et d'autres véhicules à voie unique, doté d'un étrier de serrage (11) comportant deux branches (12, 13) reliés l'un à l'autre, et d'un ressort de traction (20) disposé de manière amovible près des extrémités arrière des branches (12, 13), lequel ressort présente un étrier tendeur central (22) et deux spires de ressort (23, 24) disposées latéralement par rapport à l'étrier tendeur (22), les spires présentant respectivement un crochet de retenue extérieur en interaction avec respectivement l'une des branches de l'étrier de serrage (11), et avec un agencement de verrouillage (30) pour fixer de manière amovible le volet de ressort avec le ressort de traction au porte-bagages présentant des éléments longitudinaux et des éléments transversaux, l'agencement de verrouillage (30) présentant des éléments de verrouillage (31A, 31B) qui peuvent être verrouillés sur des logements de verrouillage situés sur les éléments longitudinaux du porte-bagages, les éléments de verrouillage (31A, 31B) pouvant être verrouillés sur les logements de verrouillage en rapprochant les branches (12, 13) et les spires de ressort (23, 24) pendant le processus d'assemblage et pouvant être détachés du porte-bagages en rapprochant les branches (12, 13) et les spires de ressort (23, 24) pendant le processus de désassemblage, respectivement, et **caractérisé en ce que** l'agencement de verrouillage (30) comprend au moins un élément de sécurité (36) qui peut être positionné entre les spires de ressort (23, 24) et qui, à l'état assemblé, empêche ou limite le fait que les branches (12, 13) de l'étrier de serrage (11) soient rapprochées l'une de l'autre.

2. Volet de ressort de porte-bagages selon la revendication 1, **caractérisé en ce que** l'agencement de verrouillage (30) comprend une barre transversale (35) et deux éléments de verrouillage (31A, 31B) séparés, la barre transversale présentant une épaisseur qui est inférieure au diamètre intérieur des spires de ressort, et, à l'état assemblé, les éléments de verrouillage étant reliés entre eux d'une manière à distance variable par la mise en prise de la barre transversale à travers les spires.

3. Volet de ressort de porte-bagages selon la revendication 2, **caractérisé en ce que** chaque élément de verrouillage (31A, 31B) comprend une goupille de verrouillage (33), une collerette de butée (32) et une section de douille (34) ou une section de goupille, la section de douille (34) ou la section de goupille présentant une épaisseur qui est inférieure au diamètre intérieur des spires de ressort, et à l'état assemblé pénètre respectivement au moins partiellement dans un espace intérieur délimité par les spires de ressort, et la collerette de butée à l'état assemblé venant buter de préférence contre les surfaces extérieures respectives des spires de ressort ou venant buter contre des œillets au niveau des extrémités des branches de l'étrier de serrage.

4. Volet de ressort de porte-bagages selon la revendication 2, **caractérisé en ce que** chaque élément de verrouillage comprend une mâchoire de verrouillage en forme de demi-coquille, une collerette de butée et une section de douille ou une section de goupille, la section de douille ou la section de goupille présentant une épaisseur qui est inférieure au diamètre intérieur des spires de ressort, et à l'état assemblé pénètre respectivement au moins partiellement dans un espace intérieur délimité par les spires de ressort.

5. Volet de ressort de porte-bagages selon la revendication 4, **caractérisé en ce que** la collerette de butée à l'état assemblé vient en butée contre les surfaces d'extrémité extérieures respectives des spires de ressort ou vient en butée contre des œillets au niveau des extrémités des branches de l'étrier de serrage, et les embouchures d'ouverture des mâchoires de verrouillage étant tournées vers l'extérieur ou à l'opposé respectivement l'une de l'autre à l'état assemblé.

6. Volet de ressort de porte-bagages selon la revendication 4 ou 5, **caractérisé en ce que** la collerette de butée est formée respectivement sur la face arrière d'une mâchoire de verrouillage ou est formée au moyen de la face arrière d'une mâchoire de verrouillage.

7. Volet de ressort de porte-bagages selon l'une quelconque des revendications 3 à 6, **caractérisé en ce que** la barre transversale (35) pénètre dans des ouvertures de douille sur les sections de douille (34) avec ses extrémités de traverse à l'état assemblé, ou **en ce que** la barre transversale est tubulaire et reçoit les sections de goupille des éléments de verrouillage avec son espace intérieur tubulaire.

8. Agencement de porte-bagages pour véhicules terrestres, doté d'un porte-bagages comprenant des éléments longitudinaux et des éléments transversaux, et doté d'un volet de ressort de porte-bagages qui est fixé de manière amovible au support porte-bagages, les éléments longitudinaux (2, 3) étant pourvus de logements de verrouillage pour des éléments de verrouillage du volet de ressort de porte-bagages, **caractérisé en ce que** le volet de ressort de porte-bagages est réalisé selon l'une des revendications 1 à 7.

9. Agencement de porte-bagages pour véhicules terrestres, doté d'un porte-bagages comprenant des éléments longitudinaux et des éléments transversaux et doté d'un volet de ressort de porte-bagages qui est fixé de manière amovible au support porte-bagages, les éléments longitudinaux (2, 3) étant respectivement pourvus d'un trou de verrouillage (7A, 7B) au moins sur leurs côtés intérieurs se faisant face, **caractérisé en ce que** le volet de ressort de porte-bagages est réalisé selon la revendication 3, et la goupille de verrouillage (33) faisant saillie sur l'élément de verrouillage (31A, 31B) en interaction avec l'élément longitudinal est reçue par complémentarité de forme dans le trou de verrouillage (7A, 7B) correspondant.

10. Agencement de porte-bagages selon la revendication 9, **caractérisé en ce que** la barre transversale (35) pénètre dans des ouvertures de douille sur les sections de douille (34) avec ses extrémités de traverse à l'état assemblé, ou **en ce que** la barre transversale est tubulaire et reçoit les sections de goupille des éléments de verrouillage avec son espace intérieur tubulaire.

11. Agencement de porte-bagages pour véhicules terrestres, doté d'un porte-bagages comprenant des éléments longitudinaux et des éléments transversaux, et doté d'un volet de ressort de porte-bagages qui est fixé de manière amovible au support porte-bagages, **caractérisé en ce que** le volet de ressort de porte-bagages est réalisé selon l'une quelconque des revendications 4 à 6, et les éléments longitudinaux sont pourvus, sur leurs faces intérieures tournées l'une vers l'autre et/ou sur leurs faces supérieure et/ou inférieure, d'un évidement de réception pour la mise en prise par complémentarité de formes de la mâchoire de verrouillage en forme de demi-coquille, qui est formée respectivement sur l'élément de verrouillage en interaction avec l'élément longitudinal.

12. Agencement de porte-bagages selon la revendication 11, **caractérisé en ce que** la barre transversale (35) pénètre dans des ouvertures de douille sur les sections de douille (34) avec ses extrémités de traverse à l'état assemblé, ou **en ce que** la barre transversale est tubulaire et reçoit les sections de goupille des éléments de verrouillage avec son espace intérieur tubulaire.

13. Agencement de porte-bagages selon l'une quelconque des revendications 9 à 12, **caractérisé en ce que** les éléments longitudinaux et les éléments transversaux forment un support porte-bagages avec des tiges de support et de maintien, lequel support pouvant être monté sur un cadre de bicyclette ou similaire.

14. Agencement de porte-bagages selon l'une quelconque des revendications 9 à 12, **caractérisé en ce que** les éléments longitudinaux et les éléments transversaux forment une plaque d'assemblage qui est fixée de manière amovible à un support porte-bagages qui peut être monté sur un cadre de bicyclette ou similaire.
